# EUROPEAN PATENT APPLICATION

(11) **EP 4 653 236 A1**
(43) Date of publication of application: **26.11.2025**
(21) Application number: 24177956.0
(22) Date of filing: 24.05.2024
(51) Int. Cl.: B60L 3/04, B60L 53/16, B60L 53/18, B60L 53/31

(54) **METHOD FOR SAFELY ABORTING CHARGING OF A VEHICLE AND CHARGING STATION COMPRISING MEANS FOR SAFELY ABORTING CHARGING OF A VEHICLE**

(71) Applicant: Volvo Penta Corporation, 405 08 Göteborg (SE)
(72) Inventor: OLSMO, Emil, 423 53 Torslanda (SE)
(74) Representative: Zacco Sweden AB

(57) **Abstract**

A method for safely aborting charging of a vehicle (1), wherein the method comprises:
- providing a charging station (2) with a charging abort cable (3) attached to a charging cable (4), wherein the charging abort cable (3) has a charging abort cable length (L) shorter than the charging cable (4),
- attaching the charging cable (4) to a charging inlet (5) of the vehicle (1),
- attaching the charging abort cable (3) to a charging abort switch (6),
upon the vehicle (1) moving away from the charging station (2) such that the distance between the vehicle (1) and an attachment point of the charging abort cable (3) on the charging cable (3) is greater than a charging abort cable length (L),
- disconnecting the charging abort cable (3) from the charging abort switch (6), thereby safely aborting charging of the vehicle (1) before the charging cable (4) is disconnected from the charging inlet (5).

## Description

### TECHNICAL FIELD

The disclosure relates generally to charging of electric vehicles. In particular aspects, the disclosure relates to a method for safely aborting charging of a vehicle and a charging station comprising means for safely aborting charging of a vehicle. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

During charging of electric vehicles, it is important to maintain a connection between the charging station providing the electric power and the vehicle receiving the power. Should the connection be interrupted unexpectedly and/or unwantedly during charging, there is a risk of injury to people standing close to the vehicle and of damage to the vehicle and/or the charging station.

Although solutions exist for certain types of vehicles, these solutions are not applicable to all vehicle types.

### SUMMARY

According to a first aspect of the disclosure, a method for safely aborting charging of a vehicle comprises:
- providing a charging station with a charging abort cable attached to a charging cable, wherein the charging abort cable has a charging abort cable length shorter than the charging cable,
- attaching the charging cable to a charging inlet of the vehicle,
- attaching the charging abort cable to a charging abort switch,
   upon the vehicle moving away from the charging station such that the distance between the vehicle and an attachment point of the charging abort cable on the charging cable is greater than a charging abort cable length,
- disconnecting the charging abort cable from the charging abort switch, thereby safely aborting charging of the vehicle before the charging cable is disconnected from the charging inlet. The first aspect of the disclosure may seek to reduce or remove the risk of that charging of a vehicle is suddenly and unwantedly interrupted due to a movement of the vehicle. A technical benefit may include that charging can be controllably aborted and that the risk of an electric arc occurring due to an unwanted aborting of the charging.

Optionally in some examples, including in at least one preferred example, the method comprises:
- attaching the charging abort cable to the charging abort switch mechanically or magnetically. A technical benefit may include that different solutions to how the charging abort cable is connected is possible.

Optionally in some examples, including in at least one preferred example, wherein the charging abort cable is attached to a magnetic charging abort switch, the method comprises:
- disconnecting the charging abort cable upon a force being exerted on the magnetic connection of the charging abort cable in the range of 50 N - 500 N. A technical benefit may include that it is possible to tailor the strength of the magnetic connection of the charging abort cable to the magnetic charging abort switch for different vehicles such that for large vehicles, a larger force is required to disconnect the charging abort cable. In this way, a small movement of the vehicle that does not pose a risk to the charging will not disconnect the charging abort cable.

Optionally in some examples, including in at least one preferred example, the method comprises:
- attaching the charging abort cable to a charging abort switch on a ground terminal in the vehicle. A technical benefit may include that if the charging abort cable is connected to a ground terminal, an already present input connection in the charging unit of the vehicle can be used to detect if the charging abort cable is grounded or not. If the charging abort cable is detected to not be grounded due to movement of the vehicle, charging is aborted in a controlled manner before the charging cable is disconnected.

Optionally in some examples, including in at least one preferred example, the method comprises:
- identifying if the charging abort cable is properly attached to the charging abort switch by detecting if a parking brake of the vehicle is engaged. A technical benefit may include that for any vehicle using a handbrake, detecting if the parking brake is engaged can make use of already present sensors and control units of the vehicle.

Optionally in some examples, including in at least one preferred example, the method comprises:
- providing the charging station with a charging abort cable having a charging abort cable length of 25 % - 75 % of a charging cable length. A technical benefit may include that this length will ensure that the charging cable will not be able to be unwantedly disconnected before the charging abort cable is disconnected.

According to a second aspect of the disclosure, a charging station for a vehicle is provided, wherein a charging cable of the charging station is arranged to be attached to a charging inlet of the vehicle, wherein the charging cable comprises a charging abort cable having a charging abort cable length shorter than the charging cable arranged to be connected to a charging abort switch on the vehicle, such that when the vehicle moves away from the charging station with the charging cable still connected to the charging inlet such that the distance between the vehicle and an attachment point of the charging abort cable on the charging cable becomes greater than a charging abort cable length, the charging abort cable is disconnected from the charging abort switch, thereby safely aborting the charging of the vehicle before the charging cable is disconnected from the charging inlet.

The second aspect of the disclosure may seek to provide a charging station that is able to reduce or remove the risk of that charging of a vehicle is suddenly and unwantedly interrupted due to a movement of the vehicle. A technical benefit may include that charging can be controllably aborted and that the risk of an electric arc occurring due to an unwanted aborting of the charging.

Optionally in some examples, including in at least one preferred example, the charging abort cable comprises a mechanical or a magnetic connection arranged to connect to the charging abort switch on the vehicle. A technical benefit may include that the charging station can be equipped with different solutions to how the charging abort cable is connected to the vehicle.

Optionally in some examples, including in at least one preferred example, the charging abort cable is arranged to disconnect from the vehicle upon a force being exerted on the magnetic connection of the charging abort cable in the range of 50 N - 500 N. A technical benefit may include that it is possible to tailor the strength of the magnetic connection of the charging abort cable to the magnetic charging abort switch for different vehicles such that for large vehicles, a larger force is required to disconnect the charging abort cable. In this way, a small movement of the vehicle that does not pose a risk to the charging will not disconnect the charging abort cable.

Optionally in some examples, including in at least one preferred example, the charging abort cable is arranged to be attached to a charging abort switch on a ground terminal in the vehicle. A technical benefit may include that if the charging abort cable is connected to a ground terminal, an already present input connection in the charging unit of the vehicle can be used to detect if the charging abort cable is grounded or not. If the charging abort cable is detected to not be grounded due to movement of the vehicle, charging is aborted in a controlled manner before the charging cable is disconnected.

Optionally in some examples, including in at least one preferred example, the charging station is provided with a charging abort cable having a charging abort cable length of 25 % - 75 % of a charging cable length.

According to a third aspect of the disclosure, a vehicle comprises a charging abort switch arranged to be connected to a charging abort cable of a charging cable of a charging station according to the second aspect of the disclosure. The third aspect of the disclosure may seek to provide a vehicle that can charge at a charging station of the second aspect and thereby take advantage of the reduction or complete removal of the risk of that charging of the vehicle is suddenly and unwantedly interrupted due to a movement of the vehicle. A technical benefit may include that charging can be controllably aborted and that the risk of an electric arc occurring due to an unwanted aborting of the charging.

Optionally in some examples, including in at least one preferred example, the vehicle is a boat, a car, a truck, a construction vehicle or a motorcycle. Generally, any chargeable vehicle can benefit from the method and charging station of the above described first and second aspects. Some examples of vehicles than can benefit from the method and charging station are mobile cranes, excavators and similar large construction vehicles that may be in one place during longer periods of time. Also, mini excavators and similar that uses hydraulically controlled propulsion may benefit.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIG. 1** is an exemplary overview of a charging station for a vehicle according to an example where a charging abort cable and a charging cable are connected to a vehicle.
**FIG. 2** is an exemplary overview of a charging station according to an example where the charging abort cable has been disconnected from the vehicle while the charging cable is still connected to the vehicle.
**FIG. 3** schematically discloses a flowchart of a method for safely aborting charging of a vehicle according to an example.

### DETAILED DESCRIPTION

The detailed description set forth below provides information and examples of the disclosed technology with sufficient detail to enable those skilled in the art to practice the disclosure.

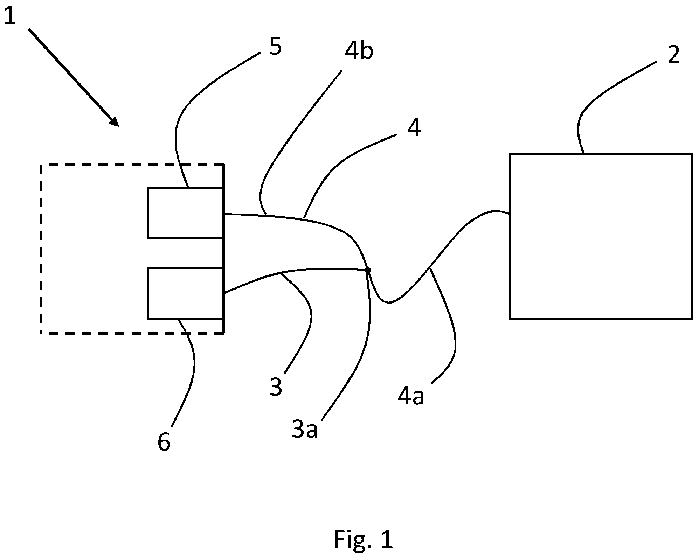

**FIG. 1** is an exemplary overview of a charging station 2 for a vehicle 1 according to an example where a charging abort cable 3 and a charging cable 4 are connected to a vehicle 1. The charging station 2 comprises a charging cable 4 attached to the charging station 2 which is arranged to be attached to a charging inlet 5 of the vehicle 1 according to known techniques. The charging cable 4 further comprises a charging abort cable 3 arranged to be connected to a charging abort switch 6 on the vehicle 1. The charging abort cable 3 is shorter than the charging cable 4 and is attached to the charging cable 4 at an attachment point 3a on the charging cable 4. In the example of FIG. 1, the charging abort cable 3 is attached to the charging cable 4 near the middle of the charging cable 4.

When charging, both the charging cable 4 and the charging abort cable 3 is connected to the vehicle 1 before charging can commence. Detection that the charging abort cable 3 is attached can be made in several different ways, such as identifying that a magnetic connection is established, identifying that a mechanic connection is established or detecting a signal indicating that the charging abort cable 3 is grounded.

In the example of FIG. 1, both the charging cable 4 and the charging abort cable 3 is attached to the vehicle 1 and charging is commenced.

The charging abort cable 3 may as examples comprise either a mechanical connector or a magnetic connector arranged to connect to a corresponding connector of the charging abort switch 6 on the vehicle 1.

The charging abort cable 3 is attached to the charging cable 4 at attachment point 3a. This results in that the charging cable 4 can be divided into a first part 4a extending from the charging station 2 to the attachment point 3a and a second part 4b extending from the attachment point to the charging inlet 5. The charging abort cable 3 is attached to the charging cable 4 at the attachment point 3a such that the charging abort cable length (L) is shorter than the second part 4b of the charging cable 4. In this way, when the vehicle 1 moves away from the charging station 2, the charging abort cable 3 will reach its full extension before the second part 4b of the charging cable will be extended.

If a magnetic connection is used between the charging abort cable 3 and the vehicle 1, the charging abort cable 3 can be arranged to disconnect from the vehicle 1 upon a force being exerted on the magnetic connection of the charging abort cable 3 in the range of 50 N - 500 N. Further, using a magnetic connection may provide additional ways to detect if the charging abort cable 3 is connected to the vehicle 1 or not. A magnetic connection may also provide means for monitoring the system and obtain diagnostic information of the connection. This may for instance be used to detect tampering of the connection or to detect malfunctions of the connection.

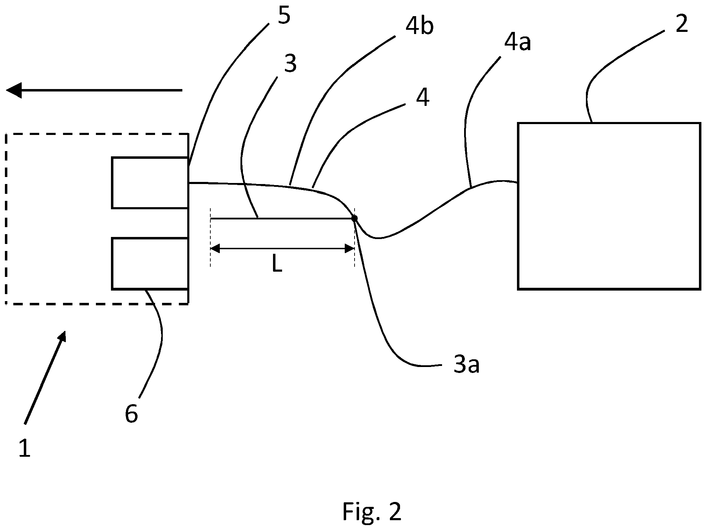

**FIG. 2** is an exemplary overview of a charging station 2 according to an example where the charging abort cable 3 has been disconnected from the vehicle 1 while the charging cable 4 is still connected to the vehicle 1.

In **FIG. 2****,** the vehicle 1 has moved a distance away from the charging station 2 as indicated by the arrow above the vehicle 1. The distance that the vehicle 1 has moved is greater than the charging abort cable length L of the charging abort cable 3 and the charging abort cable 3 is thereby disconnected from the vehicle 1.

During the movement of the vehicle 1 away from the charging station 2, the charging abort cable 3 first becomes extended to its full charging abort cable length L. After further movement of the vehicle 1 away from the charging station 2, the charging abort cable 3 disconnects from the charging abort switch 6 on the vehicle 1, thereby safely aborting the charging. In this way, any further movement by the vehicle 1 away from the charging station 2 that will lead to that the charging cable 4 disconnects from the vehicle 1, will not cause any electric arcs or risk damaging the vehicle 1 and the charging station 2.

The charging abort cable 3 can have a charging abort cable length L that is 25 % - 75 % of the charging cable's 4 length. This allows for flexible attachment of the charging abort cable 3 to the charging cable 4 and the distance the vehicle 1 can move before charging is aborted can be adapted depending on the type of vehicle 1 and other characteristics of where the vehicle 1 is charged. For instance, a charging station 2 for a boat can have a longer charging abort cable 3 leading to that smaller movements from the sea does not lead to an aborted charging.

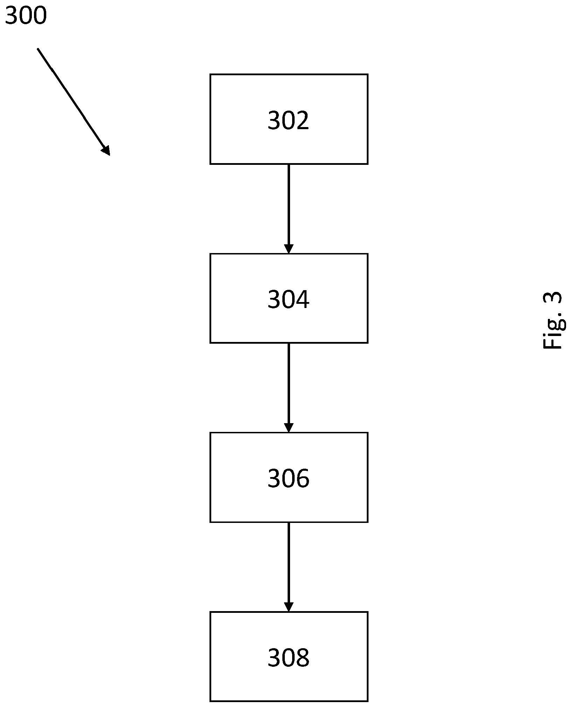

**FIG. 3** schematically discloses a flowchart of a method 300 for safely aborting charging of a vehicle 1 according to an example. **FIG. 3** is an illustrated example of actions, steps or operations which may be performed to solve the problem of uncontrolled disconnection of a charging cable 4. The method 300 may comprise the following actions, steps or operations.

**Action 302:** A charging station 2 is provided with a charging abort cable 3 attached to a charging cable 4, wherein the charging abort cable 3 is shorter than the charging cable 4.

**Action 304:** The charging cable 4 is attached to a charging inlet 5 of the vehicle 1.

**Action 306:** The charging abort cable 3 is attached to a charging abort switch 6. Actions 304 and 306 can be executed in any order.

**Action 308:** The charging abort cable 3 is disconnected from the charging abort switch 6, when the vehicle 1 has moved away from the charging station 2 such that the distance between the vehicle 1 and an attachment point of the charging abort cable 3 on the charging cable 3 is greater than a charging abort cable length L.

The operational actions described in any of the exemplary aspects herein are described to provide examples and discussion. Although a specific order of method actions may be shown or described, the order of the actions may differ. For instance, the charging cable 4 may be attached to the charging inlet 5 after the charging abort cable 3 is attached to the charging abort switch 6. In addition, two or more actions may be performed concurrently or with partial concurrence.

Example 1: A method for safely aborting charging of a vehicle, wherein the method comprises:
- providing a charging station with a charging abort cable attached to a charging cable, wherein the charging abort cable has a charging abort cable length shorter than the charging cable,
- attaching the charging cable to a charging inlet of the vehicle,
- attaching the charging abort cable to a charging abort switch,
   upon the vehicle moving away from the charging station such that the distance between the vehicle and an attachment point of the charging abort cable on the charging cable is greater than a charging abort cable length,
- disconnecting the charging abort cable from the charging abort switch, thereby safely aborting charging of the vehicle before the charging cable is disconnected from the charging inlet.

Example 2: The method according to example 1, wherein the method comprises:
- attaching the charging abort cable to the charging abort switch mechanically or magnetically.

Example 3: The method according to example 1 or 2, wherein charging abort cable is attached to a magnetic charging abort switch, the method comprises:
- disconnecting the charging abort cable upon a force being exerted on the magnetic connection of the charging abort cable in the range of 50 N - 500 N.

Example 4: The method according to example 1 or 2, wherein the method comprises:
- attaching the charging abort cable to a charging abort switch on a ground terminal in the vehicle.

Example 5: The method according to any one of the preceding examples, wherein the method comprises:
- identifying if the charging abort cable is properly attached to the charging abort switch by detecting if a parking brake of the vehicle is engaged.

Example 6: The method according to any one of the preceding examples, wherein the method comprises:
- providing the charging station with a charging abort cable having a charging abort cable length of 25 % - 75 % of a charging cable length.

Example 7: A charging station for a vehicle, wherein a charging cable of the charging station is arranged to be attached to a charging inlet of the vehicle, wherein the charging cable comprises a charging abort cable having a charging abort cable length shorter than the charging cable arranged to be connected to a charging abort switch on the vehicle, such that when the vehicle moves away from the charging station with the charging cable still connected to the charging inlet such that the distance between the vehicle and an attachment point of the charging abort cable on the charging cable becomes greater than a charging abort cable length, the charging abort cable is disconnected from the charging abort switch, thereby safely aborting the charging of the vehicle before the charging cable is disconnected from the charging inlet.

Example 8: The charging station according to example 7, wherein the charging abort cable comprises a mechanical or a magnetic connection arranged to connect to the charging abort switch on the vehicle.

Example 9: The charging station according to example 7 or 8, wherein when the charging abort cable is arranged to disconnect from the vehicle upon a force being exerted on the magnetic connection of the charging abort cable in the range of 50 N - 500 N.

Example 10: The charging station according to example 7 or 8, wherein the charging abort cable is arranged to be attached to a charging abort switch on a ground terminal in the vehicle.

Example 11: The charging station according to any one of the preceding examples 7-10, wherein the charging station is provided with a charging abort cable having a charging abort cable length of 25 % - 75 % of a charging cable length.

Example 12: A vehicle comprising a charging abort switch arranged to be connected to a charging abort cable of a charging cable of a charging station according to any one of examples 7-11.

Example 13: The vehicle according to example 12, wherein the vehicle is a boat, a car, a truck, a construction vehicle or a motorcycle.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A method for safely aborting charging of a vehicle (1), wherein the method comprises:
- providing a charging station (2) with a charging abort cable (3) attached to a charging cable (4), wherein the charging abort cable (3) has a charging abort cable length (L) shorter than the charging cable (4),
- attaching the charging cable (4) to a charging inlet (5) of the vehicle (1),
- attaching the charging abort cable (3) to a charging abort switch (6),
upon the vehicle (1) moving away from the charging station (2) such that the distance between the vehicle (1) and an attachment point of the charging abort cable (3) on the charging cable (3) is greater than a charging abort cable length (L),
- disconnecting the charging abort cable (3) from the charging abort switch (6), thereby safely aborting charging of the vehicle (1) before the charging cable (4) is disconnected from the charging inlet (5).

2. The method according to claim 1, wherein the method comprises:
- attaching the charging abort cable (3) to the charging abort switch (6) mechanically or magnetically.

3. The method according to claim 1 or 2, wherein charging abort cable (3) is attached to a magnetic charging abort switch (6), the method comprises:
- disconnecting the charging abort cable (3) upon a force being exerted on the magnetic connection of the charging abort cable (3) in the range of 50 N - 500 N.

4. The method according to claim 1 or 2, wherein the method comprises:
- attaching the charging abort cable (3) to a charging abort switch (6) on a ground terminal in the vehicle (1).

5. The method according to any one of the preceding claims, wherein the method comprises:
- identifying if the charging abort cable (3) is properly attached to the charging abort switch (6) by detecting if a parking brake of the vehicle (1) is engaged.

6. The method according to any one of the preceding claims, wherein the method comprises:
- providing the charging station (2) with a charging abort cable (3) having a charging abort cable length (L) of 25 % - 75 % of a charging cable length.

7. A charging station (2) for a vehicle (1), wherein a charging cable (4) of the charging station (2) is arranged to be attached to a charging inlet (5) of the vehicle (1), wherein the charging cable (4) comprises a charging abort cable (3) having a charging abort cable length (L) shorter than the charging cable (4) arranged to be connected to a charging abort switch (6) on the vehicle (1), such that when the vehicle (1) moves away from the charging station (2) with the charging cable (4) still connected to the charging inlet (5) such that the distance between the vehicle (1) and an attachment point of the charging abort cable (3) on the charging cable (3) becomes greater than a charging abort cable length (L), the charging abort cable (3) is disconnected from the charging abort switch (6), thereby safely aborting the charging of the vehicle (1) before the charging cable (4) is disconnected from the charging inlet (5).

8. The charging station (2) according to claim 7, wherein the charging abort cable (3) comprises a mechanical or a magnetic connection arranged to connect to the charging abort switch (6) on the vehicle (1).

9. The charging station (2) according to claim 7 or 8, wherein when the charging abort cable (3) is arranged to disconnect from the vehicle (1) upon a force being exerted on the magnetic connection of the charging abort cable (3) in the range of 50 N - 500 N.

10. The charging station (2) according to claim 7 or 8, wherein the charging abort cable (3) is arranged to be attached to a charging abort switch (6) on a ground terminal in the vehicle (1).

11. The charging station (2) according to any one of the preceding claims 7-10, wherein the charging station (2) is provided with a charging abort cable (3) having a charging abort cable length (L) of 25 % - 75 % of a charging cable length.

12. A vehicle (1) comprising a charging abort switch (6) arranged to be connected to a charging abort cable (3) of a charging cable (4) of a charging station (2) according to any one of claims 7-11.

13. The vehicle (1) according to claim 12, wherein the vehicle (1) is a boat, a car, a truck, a construction vehicle or a motorcycle.
